# EUROPEAN PATENT SPECIFICATION

(11) **EP 3 938 250 B1**
(45) Date of publication and mention of the grant of the patent: **07.01.2026**
(21) Application number: 20839412.2
(22) Date of filing: 18.11.2020
(51) Int. Cl.: B60R 25/24, B60R 25/25

(54) **A METHOD FOR OPENING THE TRUNK OF A VEHICLE**
VERFAHREN ZUM ÖFFNEN DES KOFFERRAUMS EINES FAHRZEUGS
PROCÉDÉ D'OUVERTURE DU COFFRE D'UN VÉHICULE

(30) Priority: 23.06.2020 TR 202009757
(43) Date of publication of application: 19.01.2022
(73) Proprietor: Oyak Renault Otomobil Fabrikalari Anonim Sirketi, Nilüfer/Bursa (TR)
(72) Inventor: GÜL, Kamil Arma an, Nilüfer/Bursa (TR)
(86) International application number: PCT/TR2020/051127
(87) International publication number: WO 2021/107899

(56) References cited:
- EP-A1- 3 578 426
- WO-A1-2016/127006
- GB-A- 2 511 377
- GB-A- 2 565 908
- US-A1- 2015 116 078
- US-A1- 2019 176 759
- US-A1- 2020 180 561
- US-B2- 9 499 125

## Description

### TECHNICAL FIELD

The present invention relates to a system and a method that enables the doors and the trunk of a vehicle to be opened automatically.

The invention is particularly related to a method that allows opening the trunk of the vehicle hands-free, when a user's hands are occupied.

### PRIOR ART

With the advancements made in technology, a large number of innovations that facilitate usage of vehicles have been introduced. In particular, hardware that allows autonomous driving has been applicable to all levels of vehicles with the development of electronic control systems in vehicles, and the applicability of sensors and radar technologies to vehicles.

In the automotive sector, apart from driving, ease of use is another important reason for customer choice/saleability of vehicles.

Easy access to the trunk compartment which functions as a storage area is particularly of great importance in vehicles that have been developed for daily use. In the known applications, opening and closing of trunk electronically are prevalently applied to improve the convenience of use.

In the prior art, applications that enable the trunk to be opened by using the buttons on remote control keys of a vehicle are available. However, these types of applications do not allow the trunk to be opened automatically, hands-free, in particular when the user's hands are occupied.

In another known application, a sensor application that enables the user to open the trunk automatically, hands-free has been provided. In the scope of this application, when the user approaches to the vicinity of vehicle, the locked doors of the vehicle are unlocked automatically. In this regard, opening the doors can be achieved when the key comes close to the vehicle. The trunk is automatically opened when the user makes a forward kicking motion towards the ETA sensor placed below the vehicle's rear. This system is deactivated in known applications when the vehicle starts moving. However, considering the price of the sensor in particular, this application leads to additional cost for sensor integration, electrical hardware-software development and also design of bumpers. Furthermore, if the rear bumper of the vehicle is dirty with residues of mud/snow/ice etc., it may affect the functionality of the sensor. Therefore, an alternative application is required.

In the USPTO patent document with the publication number US9499125B2, a system that enables the vehicle's components to be activated automatically is disclosed. In said system, it can be possible to automatically open the determined components by carrying out incremental identification instead of using an activation sensor that is particularly provided for systems that allow the user to get in the vehicle without using keys. In the scope of this embodiment, a two-step verification system is disclosed by particularly identifying a key or electronic device. Thus, when the key or the device comes close to the vehicle, the trunk, the charging port, or fuel filler flap are enabled to be opened automatically.

In the USPTO patent document with the publication number US2015/116078 A1 mentions an enhanced vehicle key fob which has an accelerometer. In this method, the key fob measures human vital signs and compares data to threshold values. After that the key fob controls vehicle functions if measured signs exceed the threshold values. In another embodiment of the invention, mentioned signs can be audio data. However, this solution not resolve movement of the key fob. Also, checks all movement of the fobs for motion comparing.

In the applications mentioned above, the identification for opening is partially automated and does not comprise an automatic recognition system for the user. Also, the customization of the key remains limited.

Consequently, all of the abovementioned problems have made it mandatory to carry out an innovation in the related field.

### THE AIM OF THE INVENTION

The present invention aims to eliminate the aforementioned problems and to provide an innovation in the related technical field.

The main aim of the invention is to provide a customized key configuration that allows the automatic activation of the identified components of the vehicle when the user's hands are occupied.

Another aim of the invention is to provide a cost optimized system that particularly enables the trunk to be opened automatically.

A further aim of the invention is to eliminate the problem of the sensors not being activated due to the environmental factors.

Yet another aim of the invention is to provide a touch-free opening of a lock or trunk (cover/lid) by identifying various parameters in the key.

Another aim of the invention is to enable the vehicle to recognize the driver when the driver approaches the vehicle within the framework of the driver recognition system.

### BRIEF DESCRIPTION OF THE INVENTION

The present invention is related to a method of opening the trunk in an attempt to provide all of the aims that are mentioned above and that will be apparent from the detailed description below.

The invention is a method that enables at least one component that has been identified on the vehicle to be activated in a touch-free manner, characterized in that it allows a component dedicated to at least one predefined motion template to open automatically when one of the keys come close to the vehicle and when at least a predefined motion template on the key device is carried out.

A predefined motion is established on at least one of the axis's of Cartesian/cyclindrical/ spherical coordinates of time-space continuum, such as axis X, axis Y, and/or axis Z, during a determined time or at specific repetitions, consecutive movements and at given values.

In another preferred embodiment of the invention, the opening of the trunk is allowed by measuring the motion depending on a predefined acceleration/angle by using a sensor.

The driver is enabled to be recognized beforehand by mapping the reflections of the driver's walking movements at three axes onto the sensor provided on the key when the driver is walking.

The verification system is enabled to be activated for getting prepared for the activation of the component, as the key approaches the vehicle.

In yet another preferred embodiment of the invention, a key comprising a sensor that enables measuring acceleration and/or angle is provided.

Still, in another embodiment of the invention, the invention comprises a key that is a mobile device.

It operates together with a model that enables axial calibration by determining the position of the key automatically relative to the horizontal axis before a movement action is performed by the key.

It allows the activation movement to be followed smoothly by enabling the X axis, Y axis, and Z axis to be calibrated by taking the axial calibration as a reference based on the motion reflected by the driver's walking motion to the sensor. Also same methodology can be applied to different coordinate systems.

It is enabled to be activated automatically upon the key's activation movement relative to its distance to any one of the vehicle's components.

The scope of the invention is defined in the accompanying claims and cannot be limited to this brief and detailed description, which have only been provided as examples. It should be appreciated that anyone skilled in the art can reach similar embodiments in light of the aforementioned description without departing from the main subject matter of the invention.

### BRIEF DESCRIPTION OF DRAWINGS

Figure 1 shows a representative image of the prior art which illustrates automatic opening of the trunk.
Figure 2 shows a flow chart illustrating the operation of the method subject to the invention.
Figure 3 A shows the key as being inside the front pocket of a pair of trousers, 3 B shows the key as being inside the back pocket of the trousers, 3 C shows the key being inside a pocket of a jacket, 3 D shows the exemplary data collected from three axes where the key is inside a purse.
Figure 4 A shows an exemplary mobile device that is an embodiment of the key.
Figure 4 B shows a representative schematic of the key.
Figure 4C shows a representative schematic of an electronic smart device.

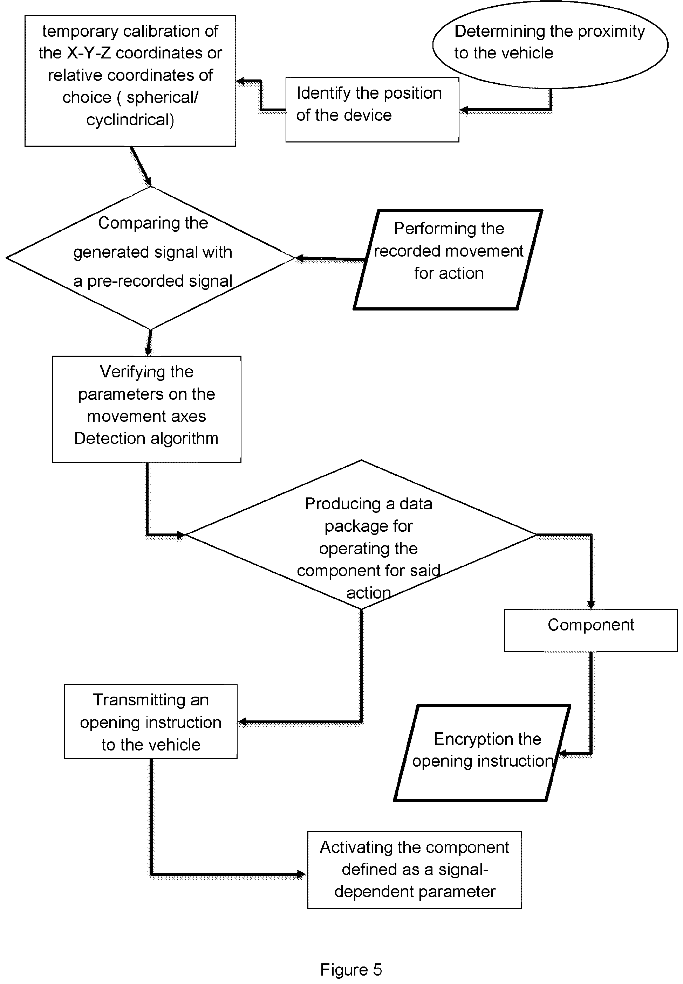

Figure 5 shows a flow chart describing the activation of the component present on the vehicle, via the key.

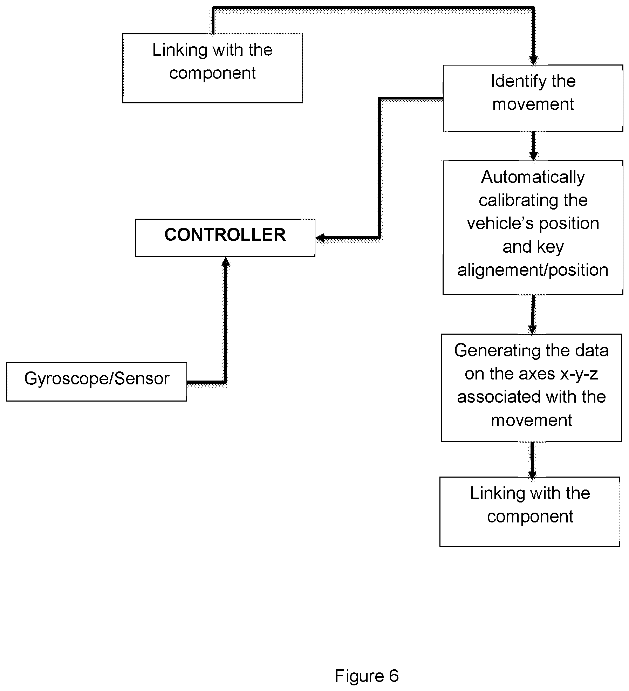

Figure 6 shows a flow chart describing the operation of the key.

### DESCRIPTION OF THE REFERENCE NUMBERS IN DRAWINGS

10. Display
20. Controller
30. Sensor
40. Button
50. Communication unit
B. Bumper
C. Component
K. Key
S. ETA
T. Trunk
V. Vehicle
X. Movement at the axis X
Y. Movement at the axis Y
Z. Movement at the axis Z

### DETAILED DESCRIPTION OF THE INVENTION

In this detailed description, said **trunk (T) opening method** subject to the invention has been disclosed by exemplary and non-limiting embodiments for the subject of the invention to be better understood.

The subject matter of the invention is particularly related to a method that enables the user to open a trunk, by hands-free method, when the user's hands are occupied.

The invention is related to a method that enables at least one component that has been identified on the vehicle (V) to be activated in a touch-free manner and allows the component dedicated to at least one motion template, to automatically open, when a key (K) comes close to the vehicle (V), and aforementioned, a said motion template identified on said key (K) device is performed.

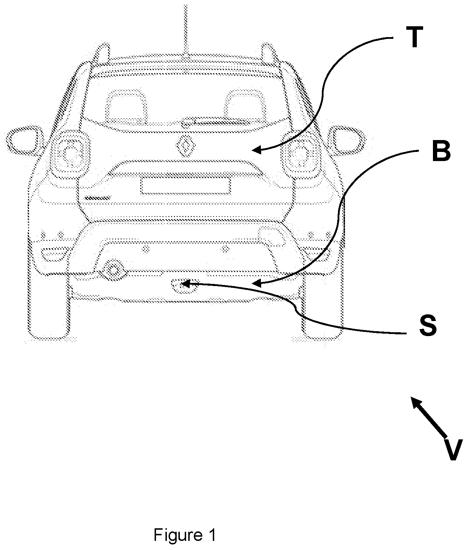

Figure 1 shows a representative illustration of the prior art where the touch-free component (C) is activated. As shown in the figure, the vehicle (V) can identify the key when the key (K) is present inside the user's pocket. The trunk (T) is enabled to be opened with a forward kicking motion of the user towards the ETA (S) that is provided below the vehicle's (V) rear bumper (B).

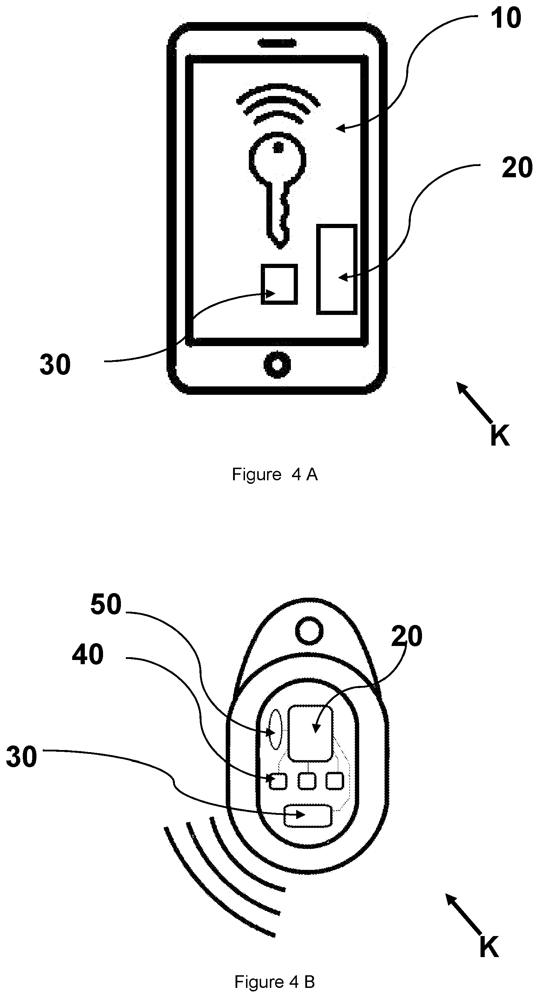

Figure 4 B shows a representative view of an embodiment of the key (K) of the invention. Said key (K) comprises at least one controller (20), at least one sensor (30), and at least one communication unit (50). In a preferred embodiment of the invention, at least one button (40) and at least one display (10) are provided on the key (K). Acceleration and/or angle can be measured at three axes through the use of the sensor (30) provided on said key (K).

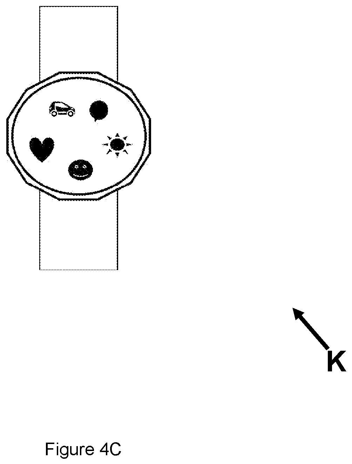

Figure 4C shows a representative illustration of another embodiment of the key (K) of the invention.

In a preferred embodiment of the invention, said key (K) can be detected within a certain range estimated by the vehicle (V), and such detection can be performed within the given security regulations.

In another embodiment of the invention, said key (K) is a mobile device as shown in Figure 4 A. Said device can be detected from the vehicle (V) via wireless communication technologies including Bluetooth or Wi-Fi or mobile band etc., within the scope of the present technology. Security verification takes place at this point. The key (K) which is the mobile device in the present invention, can sense specific movements that the user makes via the sensor (30) provided thereon, that at least has one acceleration and/or angle measurement feature.

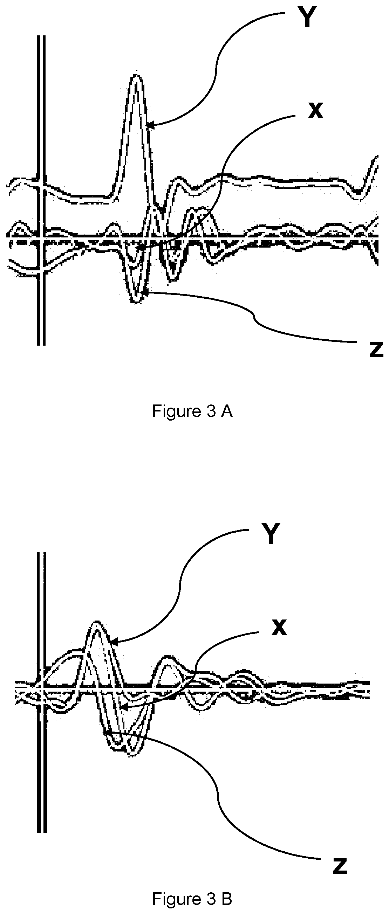

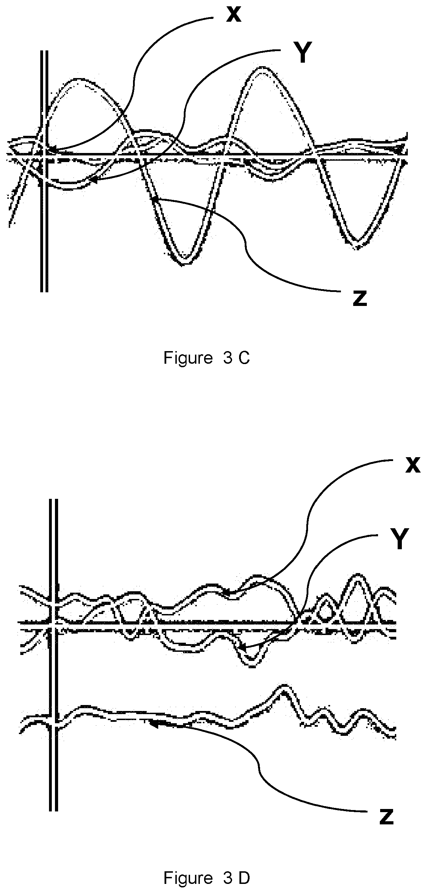

Figures 3 A, B, C, and D show the distribution of an identified movement of the key (K) at the X-Y-Z axes, in different positions that are used within the scope of the invention.

In another preferred embodiment of the invention, the user can determine different positions and different patterns for the function of opening as well as selecting the option of simply approaching the vehicle without defining any specific movement pattern for opening. Additionally, in this case, as a security condition, the user's speed of approaching to the vehicle (V), the information about whether it's raining outside or not, and safe opening conditions may be determined and the trunk (T) may remain locked.

In a diagram given in Figure 3 A, a specific data distribution susceptible to the movement created, when the key (K) is in the front pocket of a pair of trousers is examined. For example, for opening the trunk (T) or for activating any other component (C), activation takes place when the user hits his/her foot down to the ground in a specific pattern. At this point, the movement occurring at the axis Y (Y) gains significance. Here, when the comparison to be carried out in a pre-formed data pool and the movements occurring at the axis X (X) and the axis Z (Z) are at the anticipated values, the component (C) is activated by means of the activation data that is carried out at the axis Y (Y). The characteristic axes selection for opening signal in each use case can be changed depending phone positioning inside pockets. Moreover Noise signal cancellation from body vibration can be applied.

Figure 3 B, similarly, shows the key (K) in the back pocket of the trousers. When assessing, in-line with the movement pattern recorded, it can be seen that the values at the axis Z (Z) are significant. Figure 3 C shows the key (K) in the pocket of the jacket. At this point, the movement occurring at the axis Z (Z) is found significant. In Figure 3 D, where the key (K) in the purse is examined, the region that is difficult to analyze is detected at the axis Z (Z) and the specific area at the axis Y (Y) is found significant.

Within the scope of the invention, usage is performed by keeping the key (K) within a predefined range and by defining one or more activation movements to the key (K). A determining motion for activation is carried out by taking into consideration the axial movement whose distinctiveness has been determined as shown in the examples of Figures 3 A, B, C, and D; at this point, it is important to enable the component to be activated on the condition that both of the other axes are within the range of anticipated values in terms of consistency and security.

In a further embodiment of the invention, the controller (20) in the key (K) generates an artificial intelligence algorithm by collecting the motion data carried out on the key (K) according to the region where the key (K) is located during the user's daily activities. At this point, in particular, the key (K) is enabled to recognize the user by establishing customized walking pattern. Thus, security is improved regarding the activation of the component (C) in a touch-free manner.

Upon its activation, the key (K) produces a model of the user's walking movement in line with the anticipated mathematical model by collecting data at the axis X (X), the axis Y (Y), and the axis Z (Z) via the sensor (30) provided therein. As every person has a particular gait when walking, this model can be utilized as a distinctive factor. At this point, the controller (20) of the key (K) runs a learning algorithm through the data in three axes it receives from the sensor (30) and thus learns the walking characteristics of the user. Accordingly, it is made possible for the vehicle (V) to recognize the user when the user approaches the vehicle (V) in line with the communication between the key (K) and the vehicle (V). Thus, the customized components (C) in the vehicle (V) are ready to be used before the driver comes to the vehicle (V). This configuration, which improves comfort for particularly vehicles (V) of common use, additionally enhances security levels.

### Motion-dependent activation of the component

An activation movement is predefined by the driver for hands-free opening of the trunk (T). Such a movement may include stomping/kicking a foot down twice. (for example, stomping a foot down twice at a value within the range of 0.3-0.6 seconds, waiting for 0.8-1.2 seconds, and then stomping the foot down one more time) During said activation movement, activation can performed by including/focusing on the frequency of stomping of the user's foot. The component, which is the trunk (T) in this embodiment, is activated as a result of the generated signal that the said key (K) transmits to the said vehicle (V) and said trunk is opened automatically.

The key (K) carries out an artificial intelligence algorithm or correlates the signal according to the user's walking characteristics before the activation, and thereby conducts verification. When the user approaches the vehicle (V), the key (K) recognizes if the user is the active driver, via the controller (20) provided therein, and thereby it identifies the activation movement. If the user's walking characteristics cannot be verified, the component (C) does open even if the appropriate activation movement takes place. The authorization with said two-step verification model anticipated to be carried out takes place automatically at this point, which prevents the component (C) from being activated in a touch-free manner by unauthorized persons.

In another preferred embodiment of the invention, the movement generated for hands-free activation of the component (C) can be limited to a single motion and can be performed by automatically selecting the component (C) to be opened according to the location of the key (K) around the vehicle (V). The vehicle (V) can activate the component (C) in this region on the condition that the security verification is performed during or before said detection by automatically detecting the location of the key (K) relative to the vehicle (V). For example, the hood of the vehicle (V) starts to open if the driver performs the activation movement when he/she is standing in the front section of the vehicle (V), and the driver's door starts to open automatically if the activation movement is performed when the user is in front of the driver's door of vehicle (V), the fuel filler flap opens automatically if the activation movement is performed in front of the fuel tank area.

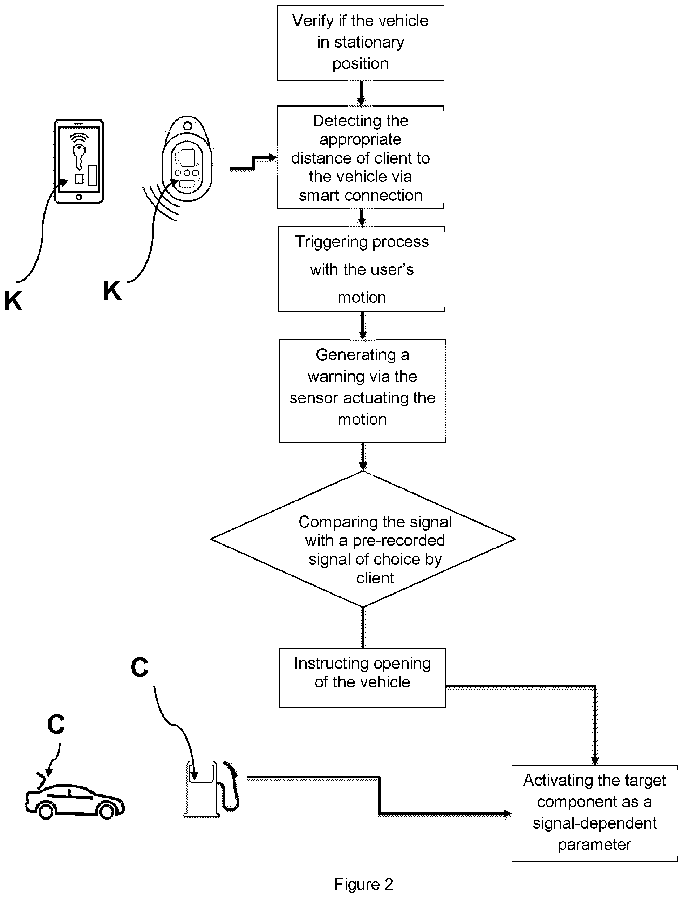

Figure 2 shows a flow chart illustrating the operational steps of the method subject to the invention. The operation flow within the scope of the invention is as follows.
- Detecting Stationary condition of the vehicle
- Keeping the vehicle in a stationary position/Keeping the engine turned off
- Detecting the appropriate range between the user and the vehicle via smart connection
- Activation of Triggering procedure via vicinity check
- Triggering with the user's motion
- Processing the motion sensed by the sensor using the controller
- Comparing the signal with a pre-recorded signal
- Giving the instruction to open
- Actuating the defined component according to the signal

In a further preferred embodiment of the invention, said component may be a switch, relay, or an electronic trigger means that enables any equipment to be unlocked.

Figure 4 A shows a representative view of an embodiment of the key (K). Said key (K) comprises at least one controller (20), at least one display (10), and at least one sensor (30). Said sensor (30) is an acceleration sensor (30) in a preferred embodiment. In an alternative embodiment, an angle sensor (30) may also be used. In a further preferred embodiment, said key (K) is a mobile device and may be used via an application installed on said mobile device.

In an alternative embodiment, sensor can be microfluidic position sensor to detect the movements in specific axes of coordinates.

Figure 4 B shows an alternative embodiment of the key (K) subject to the invention. In said embodiment, the key (K) is provided with at least one controller (20) that enables the data received from the sensor (30) to be processed, at least one memory unit, at least one button (40), and at least one communication unit (50).

In another preferred embodiment of the invention, even though the axis X (X), the axis Y (Y), and the axis Z (Z) are at different positions on the key (K), they can be determined automatically depending on the movement during walking motion. Thus, even if the key (K) turns inside the user's pocket, it can still identify the axes automatically during the process of determining the activation movement.

In yet another embodiment of the invention, the vehicle (V) has at least one receiver thereon. The controller (20) provided on the key (K) identifies the activation movement via the sensor (30). In this case, the trunk (T) is enabled to be opened, once the communication unit (50) transmits data to the receiver provided on the vehicle.

## Claims

1. A method that enables at least one component (C) identified on the vehicle (V) to be activated in a hands-free manner, wherein when a key (K) comes close to the vehicle (V) it operates with a model that enables axial calibration to be carried out by automatically determining the position of the key (K) relative to the horizontal axis before an activation movement of the key (K) takes place, wherein the activation movement is a pre-defined movement or set of movements that are performed in at least one of the axis X (X), the axis Y (Y) and/or the axis Z (Z) of Cartesian coordinates, or counterparts in cylindrical and spherical coordinates, for a pre-selected time, or at predetermined repetitions and in predetermined values, and wherein the method enables the driver to be recognized by mapping the reflections of the driver's walking pattern at three axes onto the sensor (30) that is provided in the key (K) and wherein it enables the activation of the verification system, so that the component (C) is ready for activation when the key (K) comes close to the vehicle (V) and wherein it allows the activation movement to be followed smoothly by enabling the axis X (X), the axis Y (Y) and the axis Z (Z) to be calibrated by taking the axial calibration as a reference through the movement reflected to the sensor (30) during the walking motion of the user, and wherein it allows the key (K) to be activated automatically by means of the activation movement according to the proximity of the key to any of the components (C) of the vehicle (V), and wherein at least one motion template defined on said key (K) device is performed, the component (C) dedicated to said motion template is enabled to be opened automatically.

2. A method according to claim 1, **characterized in that** the trunk (T) is enabled to be opened when the movement dependent on the pre-defined acceleration/angle is measured via the sensor (30).

3. A method according to claim 1, **characterized in that** it comprises a key (K) having a sensor (30) that enables to measure acceleration and/or angle or gradual position of sensor internal subcomponents and their signal imprints.

4. A method according to claim 1, **characterized in that** it comprises a key (K), which is a mobile device.

## Patentansprüche

1. Verfahren, das es ermöglicht, mindestens eine auf dem Fahrzeug (V) identifizierte Komponente (C) freihändig zu aktivieren, wobei ein Schlüssel (K), wenn er sich dem Fahrzeug (V) nähert, mit einem Modell arbeitet, das eine axiale Kalibrierung ermöglicht, indem es automatisch die Position des Schlüssels (K) relativ zur horizontalen Achse bestimmt, bevor eine Aktivierungsbewegung des Schlüssels (K) stattfindet, wobei die Aktivierungsbewegung eine vordefinierte Bewegung oder ein Satz von Bewegungen ist, die in mindestens einer der Achsen X (X), der Achse Y (Y) und/oder der Achse Z (Z) kartesischer Koordinaten oder Gegenstücken in zylindrischen und sphärischen Koordinaten für eine vorgewählte Zeit oder bei vorbestimmten Wiederholungen und in vorbestimmten Werten durchgeführt werden, und wobei das Verfahren die Erkennung des Fahrers durch Abbildung der Reflexionen des Laufmusters des Fahrers in drei Achsen auf den im Schlüssel (K) vorgesehenen Sensor (30) ermöglicht und wobei es die Aktivierung des Verifikationssystems ermöglicht, so dass die Komponente (C) zur Aktivierung bereit ist, wenn der Schlüssel (K) in die Nähe des Fahrzeugs (V) kommt, und wobei es ermöglicht, dass die Aktivierungsbewegung reibungslos verfolgt werden kann, indem die Achse X (X), die Achse Y (Y) und die Achse Z (Z) kalibriert werden können, indem die axiale Kalibrierung als Referenz durch die an den Sensor (30) reflektierte Bewegung während der Gehbewegung des Benutzers genommen wird, und wobei es ermöglicht, dass der Schlüssel (K) automatisch durch die Aktivierungsbewegung entsprechend der Nähe des Schlüssels zu einer der Komponenten (C) des Fahrzeugs (V) aktiviert wird, und wobei mindestens eine Bewegungsschablone, die auf der Vorrichtung des Schlüssels (K) definiert ist, ausgeführt wird, die Komponente (C), die der Bewegungsschablone gewidmet ist, ermöglicht wird, automatisch geöffnet zu werden.

2. Verfahren nach Anspruch 1, **dadurch gekennzeichnet, dass** der Kofferraum (T) zum Öffnen freigegeben wird, wenn die von der vorgegebenen Beschleunigung/Winkel abhängige Bewegung über den Sensor (30) gemessen wird.

3. Verfahren nach Anspruch 1, **dadurch gekennzeichnet, dass** es einen Schlüssel (K) mit einem Sensor (30) umfasst, der es ermöglicht, die Beschleunigung und/oder den Winkel oder die schrittweise Position der internen Teilkomponenten des Sensors und deren Signalabdrücke zu messen.

4. Verfahren nach Anspruch 1, **dadurch gekennzeichnet, dass** es einen Schlüssel (K) umfasst, der ein mobiles Gerät ist.

## Revendications

1. Une méthode qui permet d'activer au moins un composant (C) identifié sur le véhicule (V) de manière mains libres, dans laquelle, lorsqu'une clé (K) s'approche du véhicule (V), elle fonctionne avec un modèle qui permet d'effectuer un calibrage axial en déterminant automatiquement la position de la clé (K) par rapport à l'axe horizontal avant qu'un mouvement d'activation de la clé (K) n'ait lieu, dans lequel le mouvement d'activation est un mouvement ou un ensemble de mouvements prédéfinis qui sont effectués dans au moins l'un des axes X (X), Y (Y) et/ou l'axe Z (Z) des coordonnées cartésiennes, ou leurs équivalents en coordonnées cylindriques et sphériques, pendant un temps pré sélectionné, ou à des répétitions prédéterminées et selon des valeurs prédéterminées, et dans lequel la méthode permet de reconnaître le conducteur en cartographiant les reflets du schéma de marche du conducteur sur trois axes sur le capteur (30) qui est prévu dans la clé (K) et dans lequel il permet l'activation du système de vérification, de sorte que le composant (C) est prêt à être activé lorsque la clé (K) s'approche du véhicule (V) et dans lequel il permet au mouvement d'activation d'être suivi en douceur en permettant à l'axe X (X), à l'axe Y (Y) et l'axe Z (Z) en prenant le calibrage axial comme référence à travers le mouvement réfléchi vers le capteur (30) pendant le mouvement de marche de l'utilisateur, et dans lequel il permet à la clé (K) d'être activée automatiquement au moyen du mouvement d'activation en fonction de la proximité de la clé avec l'un quelconque des composants (C) du véhicule (V), et dans lequel au moins un modèle de mouvement défini sur ledit dispositif à clé (K) est exécuté, le composant (C) dédié audit modèle de mouvement est activé pour être ouvert automatiquement.

2. Une méthode selon la revendication 1, **caractérisée en ce que** le coffre (T) peut être ouvert lorsque le mouvement dépendant de l'accélération/angle prédéfini est mesuré via le capteur (30).

3. Une méthode selon la revendication 1, **caractérisée en ce qu'**elle comprend une clé (K) ayant un capteur (30) qui permet de mesurer l'accélération et/ou l'angle ou la position graduelle des sous-composants internes du capteur et leurs empreintes de signal.

4. Une méthode selon la revendication 1, **caractérisée en ce qu'**elle comprend une clé (K), qui est un dispositif mobile.
